(19)

Europäisches
Patentamt
European
Patent Office
Office européen
des brevets

(11) **EP 1 727 388 B1**

(12) **EUROPEAN PATENT SPECIFICATION**

(45) Date of publication and mention
of the grant of the patent:
**06.05.2009 Bulletin 2009/19**

(51) Int Cl.:
*H04L 1/00* (2006.01)          *H04B 7/005* (2006.01)

(21) Application number: **06120463.2**

(22) Date of filing: **15.05.2003**

(54) **Method and system for control of congestion in CDMA systems**

Verfahren und System zur Stausteuerung in CDMA-Systemen

Procede et systeme de controle de congestion dans des systemes d'acces multiple par repartition de code

(84) Designated Contracting States:
**AT BE BG CH CY CZ DE DK EE ES FI FR GB GR HU IE IT LI LU MC NL PT RO SE SI SK TR**

(30) Priority: **24.05.2002  US 383025 P**
**04.10.2002  US 265046**

(43) Date of publication of application:
**29.11.2006  Bulletin 2006/48**

(60) Divisional application:
**09155047.5**

(62) Document number(s) of the earlier application(s) in accordance with Art. 76 EPC:
**03731197.4 / 1 510 082**

(73) Proprietor: **InterDigital Technology Corporation Wilmington, DE 19810 (US)**

(72) Inventor: **Zunginga, Juan Carlos Montreal**

**H4L 3J4 (CA)**

(74) Representative: **Pierrou, Mattias**
**Awapatent AB**
**P.O. Box 45 086**
**104 30 Stockholm (SE)**

(56) References cited:
**WO-A-00/38348          WO-A-01/52425**
**WO-A-98/24199          WO-A2-01/93454**
**WO-A2-98/29961**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present invention relates to code division multiple access (CDMA) systems with multi-user detection (MUD) capabilities, where the capacity of the system is limited by non-cancelled intra-cell interference, non-cancelled inter-cell interference and interference associated with the noise floor.

In CDMA systems, one of the factors that limits the capacity of the system is interference. In general, these systems try to generate as little interference as possible. Power control is one approach that is commonly used in order to maintain the interference limits as low as possible. Nevertheless, when a CDMA system attempts to support many users, even if the transmission power is being controlled, the levels of interference may not be acceptable.

The concept of CDMA uplink (UL) pole capacity has been widely used for evaluating when a system is becoming congested. This concept is based on the exponential growth of interference caused by a CDMA system, i.e. all interference above the noise floor. The interference caused by a CDMA system is made up of intra-cell interference and inter-cell interference. Intra-cell interference is interference generated in a cell that is occupied by a user. Inter-cell interference, in contrast, is interference generated from all sources outside of the cell in which the user is located. The pole capacity is the theoretical maximum capacity assuming the mobiles have infinite available transmitting power. The actual capacity is typically a fraction of the pole capacity. Although the concept generally applies to any point-to-multipoint CDMA system, the use of a MUD in the receiver that cancels some of the intra-cell interference varies the principle on which the concept is based thereby rendering the concept not applicable.

A method is therefore needed for evaluating congestion in CDMA systems having MUD capabilities.

WO 98/24199 discloses a method for load control and a radio system. A load result is formed either by comparing a signal strength of desired signals and a combined total strength of interferences and the desired signals or by weighting a signal-to-interference ratio with a bandwidth or a data transmission rate. The load result is compared with a threshold value of the highest load level allowed of a cell. The data transmission rate in the cell is increased if the load result is smaller than the threshold value and reduced if the load result exceeds the threshold value.

WO 01/93454 discloses a communications system and method of administrating connections therein. Its disclosure includes a subscriber unit wanting to initiate a CDMA call while being subject to propagation conditions involving near-in deep fades. Admission to the system is controlled based on cell noise rise measurements from surrounding near-in cells whether the system will be able to cope with the possibly massive increase in interference if the subscriber unit initially communicates with a far-away BSS but then moves out of the deep fade propagation condition.

SUMMARY

The present invention includes a method and system for monitoring and controlling congestion in the uplink (UL) based on User Equipment (UE) measurements or Radio Access Network (RAN) measurements for code division multiple access (CDMA) systems having multi-user detection (MUD) capabilities.

BRIEF DESCRIPTION OF THE DRAWINGS

Figure 1 is a flow diagram showing a method for monitoring congestion in the UL based on UE measurements for CDMA systems having MUD capabilities in accordance with an embodiment of the invention.
Figure 2 is a flow diagram showing a method for monitoring congestion in the UL based on RAN measurements for CDMA systems having MUD capabilities in accordance with an embodiment of the invention.
Figure 3 is a flow diagram showing a method for relieving congestion in accordance with an embodiment of the invention.
Figure 4 is a system for monitoring and controlling congestion in the UL based on UE measurements in accordance with an embodiment of the invention.
Figure 5 is a system for monitoring and controlling congestion in the UL based on RAN measurements in accordance with the invention.

DETAILED DESCRIPTION OF THE PREFERRED EMBODIMENT(S)

For uplink (UL) congestion detection based on UE measurements, the pole capacity of regular CDMA systems, i.e. CDMA systems not having MUD capabilities, can be determined by measuring the noise rise, which is the ratio of the total perceived interference to noise floor:

$$Noise\_rise = \frac{total\_perceived\_interference}{noise\_floor} = \frac{1}{1-\eta_{UL}}$$

<div align="right">Equation (1)</div>

where the total perceived interference is all non-cancelled interference (both intra-cell and inter-cell) at the receiver, the noise floor is all noise that is unrelated to the system such as the thermal noise, and $\eta_{UL}$ is the UL load factor. In CDMA systems having MUD capabilities, however, the MUD reduces intra-cell interference ($I_{or}$) and amplifies inter-cell interference ($I_{oc}$). Therefore, to accurately measure noise rise in CDMA systems having MUD capabilities, the $\eta_{UL}$ should account for the affect the MUD has on interference.

To specifically account for the affect of the MUD, two parameters (one to account for the decrease in $I_{or}$ and one to account for the increase in $I_{oc}$) are defined and incorporated into $\eta_{UL}$. The first parameter, $\overline{\alpha}_{UL}$, represents the average ratio of the cancelled $I_{or}$ to the total $I_{or}$ and is used to account for the decrease in $I_{or}$. The second parameter, $\overline{\beta}_{UL}$, represents the average ratio of received extra $I_{oc}$ to the total $I_{oc}$ and is used to account for the increase in $I_{oc}$. The parameters $\overline{\alpha}_{UL}$ and $\overline{\beta}_{UL}$ may be measured, calculated or assumed, as desired. Using $I_{or}$, $I_{oc}\overline{\alpha}_{UL}$ and $\overline{\beta}_{UL}$, the total perceived interference as affected by the MUD is $(1-\overline{\alpha}_{UL})I_{or}+(1+\overline{\beta}_{UL})I_{oc}$.

In a first embodiment of the invention, congestion detection is based on UE measurements. UE measurements, however, with respect to interference generated by the system, are limited to $I_{or}$. Therefore, to also account for $I_{oc}$, $\eta_{UL}$ is obtained according to:

$$\eta_{UL} \approx (1+i)\sum_{j=1}^{N}\frac{1}{1+\dfrac{W}{\rho_j R_j v_j}}$$

<div align="center">Equation (2)</div>

where $i$ is a predetermined value representing a ratio of $I_{oc}$ to $I_{or}$ and the sum represents $I_{or}$. In the sum, $N$ is the number of users in the cell; W is the carrier bandwidth; and $\rho_j$, $R_j$ and $v_j$ are the signal-to-noise ratio ($E_b/N_0$) bit rate, and activity factor of the $j^{th}$ user, respectively. Multiplying $I_{or}$ by $(1+i)$ gives $[I_{or} + I_{or}(i)]$ where $I_{or}(i) = I_{oc}$ thereby allowing both intra-cell and inter-cell interference to be accounted for in $\eta_{UL}$. As can be seen from Equation 1, when $\eta_{UL}$ tends to one, noise rise tends to infinity.

Once $\eta_{UL}$ is calculated, noise rise is obtained according to:

$$Noise\_rise_{dB} = -10 \cdot \log\left[1-(1-\overline{\alpha_{UL}}+i+i\overline{\beta_{UL}})\sum_{j=1}^{N}\frac{1}{1+\dfrac{W}{\rho_j R_j v_j}}\right].$$

<div align="right">Equation (3)</div>

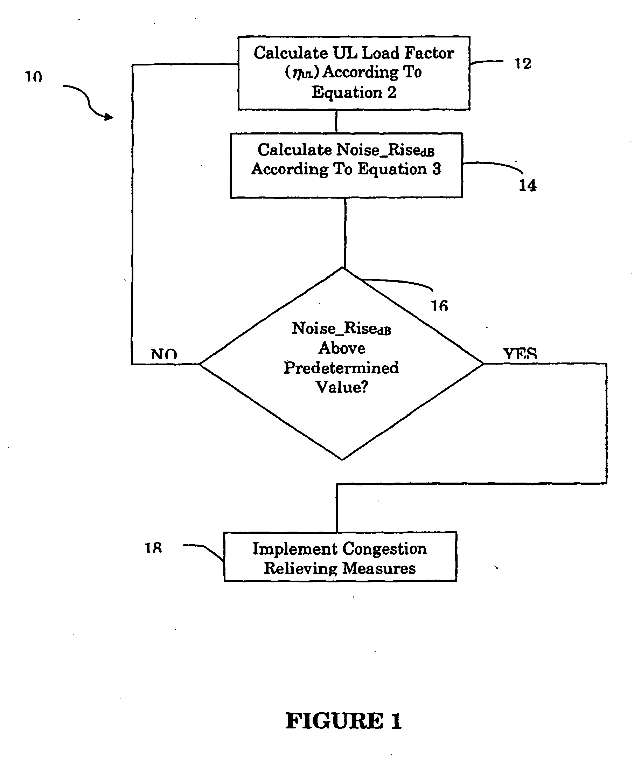

In Figure 1, steps for monitoring congestion in the UL based on UE measurements in a CDMA system having MUD capabilities are shown and indicated generally with reference number 10.

The method begins with step 12 by calculating the UL load factor ($\eta_{UL}$) preferably using equation 2, as explained above. In step 14, Equation 3 is preferably used to calculate the noise rise, as also explained above. The value of noise rise is proportional to congestion and is therefore evaluated in step 16 to determine whether congestion relieving measures should be implemented. If the value of noise rise is above a predetermined value, congestion relieving measures are implemented (step 18). The predetermined value of noise rise that is selected for triggering the congestion relieving measures may be any value. By way of example, in one embodiment, the predetermined value is between about $6_{dB}$ and about $10_{dB}$.

If, in contrast, the value of nose rise is below the predetermined value, the method may start over at step 12. The method may start over at step 12 at a predetermined time interval. The predetermined time interval may be any amount of time, as desired. By way of example, in one embodiment, the time interval is between about 3 seconds to about 5 seconds.

In another embodiment of the invention, UL congestion detection may be based on RAN measurements. In this embodiment, both $I_{oc}$ and $I_{or}$ and both $\overline{\alpha}_{UL}$ and $\overline{\beta}_{UL}$ may be defined by reading measurements available at the base station (BS). Therefore, in contrast to the first embodiment, $\eta_{UL}$ and noise rise may be calculated without using a predetermined value to obtain $I_{oc}$.

More specifically, $\eta_{UL}$ is obtained according to:

$$\eta_{UL} = 1 - \frac{noise\_floor}{total\_perceived\_interference} \qquad \text{Equation (4)}$$

where the noise floor is again all noise that is not related to the system and the total perceived interference comprises all non-cancelled interference at the receiver. Since the elements needed to calculate total perceived power are known, the total perceived power may be calculated according to $(1-\overline{\alpha}_{UL})I_{or} + (1 + \overline{\beta}_{UL})I_{oc}$ thereby allowing $\eta_{UL}$ to be calculated according to:

$$\eta_{UL} = 1 - \frac{noise\_floor}{(1 + \overline{\beta}_{UL})\mathrm{I}_{oc} + (1 - \overline{\alpha}_{UL})\mathrm{I}_{or}} \qquad \text{Equation (5)}$$

Once $\eta_{UL}$ is obtained, the effective noise rise is obtained according to:

$$Noise\_rise_{dB} = 10 \cdot \log\left[\frac{(1 + \overline{\beta}_{UL})\mathrm{I}_{oc} + (1 - \overline{\alpha}_{UL})\mathrm{I}_{or}}{noise\_floor}\right] \qquad \text{Equation (6)}$$

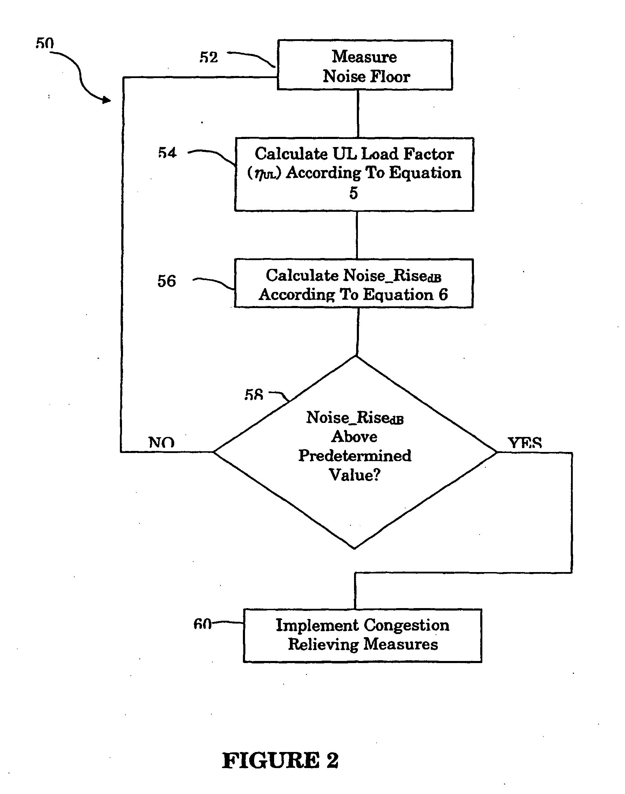

In Figure 2, steps for measuring and avoiding congestion in the UL based on RAN measurements in a CDMA system having MUD capabilities are shown and indicated generally with reference number 50.

The first step 52, is to measure the noise floor. Then, in step 54, to calculate $\eta_{UL}$ preferably according to Equation 5, as explained above, where $I_{oc}$, $I_{or}$, $\overline{\alpha}_{UL}$ and $\overline{\beta}_{UL}$ are defined by reading measurements available at the BS. In an alternate embodiment, however, the ratio $\overline{\alpha}_{UL}$ may be calculated according to:

$$\overline{\alpha}_{UL} \cong \frac{\sum_{i=1}^{M}\left[1 - \frac{(\overline{Rx\_code\_power_i} \cdot SF_i)/\overline{SIR_i} - \overline{\mathrm{I}_{oc_i}}}{(total\_perceived\_interference - \overline{\mathrm{I}_{oc_i}}) - Rx\_code\_power_i}\right]}{M} \qquad \text{Equation (7)}$$

In that embodiment, $\overline{\beta}_{UL}$ is considered negligible thereby eliminating the need for it to be read from the BS receiver. The additional parameters shown in Equation 7 are identified and defined from measurements taken at the BS receiver. By way of explanation, the additional parameters included in Equation 7 are Received Code Power for User $i$ (Rx_Code_Power$_i$), Spreading Factor for User $i$ (SF$_i$), and Number of Active Codes in the Timeslot (M).

Once $\eta_{UL}$ is obtained, noise rise is calculated according to Equation 6 in step 56. As with the embodiment shown in Figure 1, the value of noise rise is proportional to congestion. Therefore, the value of noise rise is evaluated in step 58 to determine whether congestion relieving measures should be implemented. If the value of noise rise is above a predetermined value, congestion relieving measures are implemented (step 60). Alternatively, if the value of noise rise is below the predetermined value, the method may start over at step 52 at a predetermined time interval. As with the embodiment described in conjunction with Figure 1, the predetermined values of noise rise and time interval may be any values, as desired.

The implementation of congestion relieving measures may be accomplished in a variety of ways. For example, the signal-to-noise ratio ($E_b/N_0$) target of certain users can be reduced thereby forcing those users to reduce their transmission power. A drawback of this approach, however, is that those users will experience errors in the information transmitted and the quality of the link is greatly reduced.

A preferred method for relieving congestion is to reduce the data transmission rate of a particular user or users. Users determine their transmission power depending on the data transmission rate, spreading factor gain and maximum transmission power and path loss. Therefore, reducing the data transmission rate of a particular user, which implicitly reduces power, allows the same signal-to-noise ratio to be achieved with the same spreading gain, but with less power.

Furthermore, in WCDMA TDD systems, reducing the data transmission rate implies that a certain user is not transmitting at all in a timeslot thereby providing the additional benefit of relieving congestion for that timeslot.

The preferred method for relieving congestion limits data transmission rate at the source; therefore no retransmissions are required. The selection of the user or users to whom the rates will be reduced is made by considering the transmitted power, received power and class of service. Those factors are considered for each user and may be considered individually, collectively or as a particular combination thereof, as desired. The user or users that contribute the most to the interference and have the lowest service class priority are preferably chosen as candidates for data rate reduction.

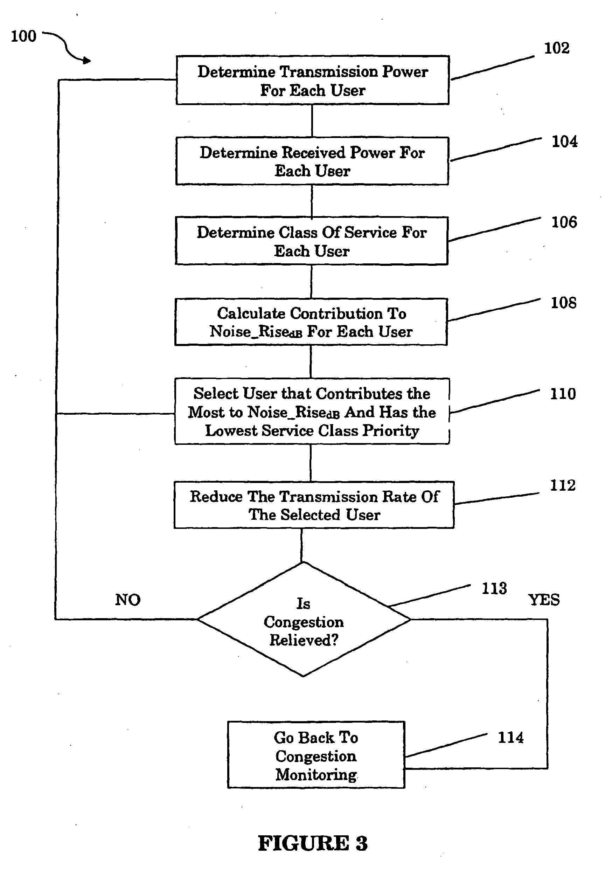

The preferred method for relieving congestion is shown in Figure 3 and indicated generally with reference numeral 100. To begin, transmission power, received power and class of service are determined for each user in steps 102, 104 and 106, respectively. Then, in step 108, each user's contribution to noise rise is calculated. As explained, noise rise may be calculated according to Equation 3 or Equation 6, as desired.

In step 110, the user that collectively contributes the most to the noise rise and has the lowest service priority is selected. To determine the selected user, a predetermined weighting factor may be used for each parameter. It is important to note that any value may be used for the weighting factor so that the influence of priority and noise contribution in selecting a user may be adjusted as desired. Furthermore it may desirable to use only one of those parameters or, alternatively, it may be desirable to use additional parameters which, like noise contribution and priority, may be weighted as desired. The criteria for selecting a user is completely flexible and may be any criteria which accurately identifies users having data transmission rates that may be reduced so as to reduce congestion. Therefore, the selected user may, for example, be determined according to:

$$\text{User\_selected} = \text{W1(priority)} + \text{W2(noise contribution)}. \qquad \text{Equation (8)}$$

In step 112, the data transmission rate of the selected user is reduced. In step 113, the amount of congestion is evaluated to determine whether congestion has been relieved. If the corresponding reduction in the noise rise is sufficient to reduce the value of noise rise below the predetermined value at which congestion is detected, the method ends and congestion monitoring, as described in conjunction with Figures 1 and 2, may continue (step 114). Alternatively, if the congestion has not been relieved so that the value of noise rise is below the predetermined value, congestion still exists and the method 100 returns to step 110 or 102, as desired, and continues until the congestion is relieved.

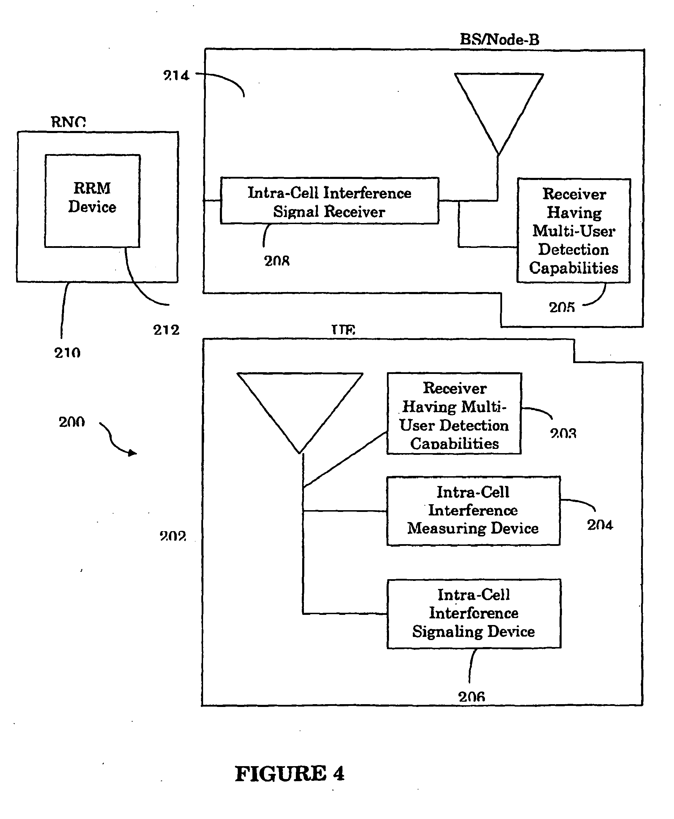

Referring now to Figure 4, a system 200 is shown for controlling congestion in the UL based on UE measurements. In system 200, congestion in the UL is monitored and controlled using UE measurements. The system 200 comprises at least one UE 202, a BS or node-B 214 and a radio network controller 210.

The UE comprises a receiver 203 having MUD capabilities, an $I_{or}$ measuring device 204 and an $I_{or}$ signaling device 206. The $I_{or}$ measuring device 204 utilizes information available at the UE 202 to measure the amount of interference generated by the system within the cell in which the UE 202 is currently located. As previously explained, that type of interference is referred to as intra-cell interference ($I_{or}$).

The BS or node-B 214 includes a receiver 205 having a MUD and an $I_{or}$ signal receiver 208. The $I_{or}$ measured by measuring device 204 is transmitted from the $I_{or}$ signaling device 206 of the UE 202 to the $I_{or}$ signal receiver 208 of the BS or node-B 214. The BS or node-B 214 communicates the $I_{or}$ to a radio network controller (RNC) 210 comprising a radio resource management (RRM) device 212. The RRM 212, in conjunction with the BS or node-B 214, if needed, processes $I_{or}$ so that the total inference, as affected by the MUD(s) 203, 205, may be obtained. As explained above, the total interference may be obtained using $I_{or}$, $\overline{\alpha}_{UL}$, $\overline{\beta}_{UL}$ and $i$.

Once the total interference is obtained, $\eta_{UL}$ and noise rise are also obtained. If the noise rise is above a predetermined value, each users' contribution to the noise rise is measured. Preferably, each users' transmission power, received power and class of service are also measured. The data transmission rate of the user currently having the highest contribution to noise rise and the lowest class of service is reduced as needed until the overall noise rise falls below the predetermined value. In other words, if reducing the data transmission rate of what was the highest contributor to noise rise is not sufficient to reduce noise rise to below the predetermined value, the method continues by recalculating each users' noise rise contribution and reducing the data transmission rate of the highest contributor. Alternatively, the method may continue by using the current user calculations and simply reduce the rate of the next highest contributor.

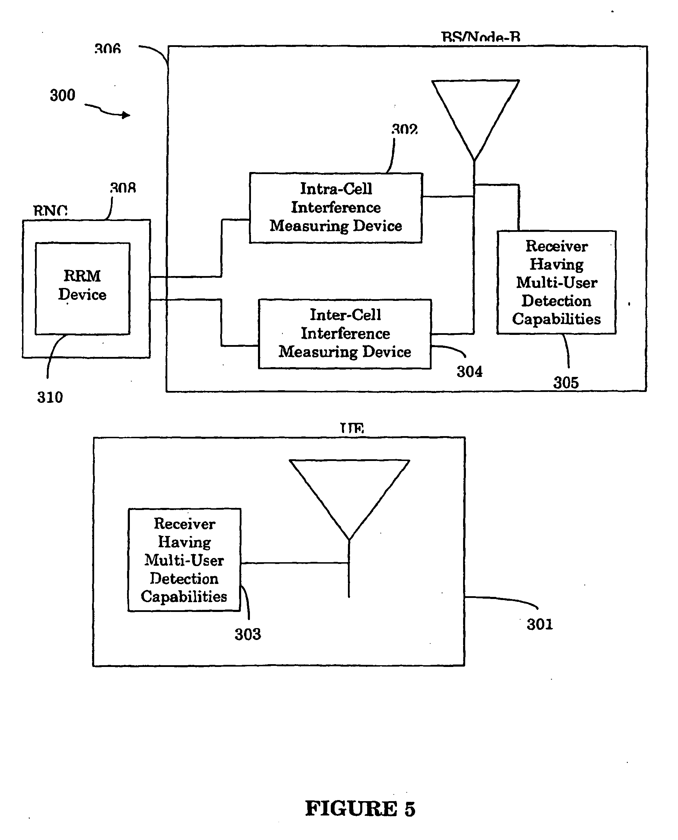

In Figure 5, another embodiment of a system for controlling congestion in the UL is shown and indicated generally with reference numeral 300. In system 300, congestion in the UL is monitored and controlled using RAN measurements. The system 300 comprises at least one UE 301, a BS or node-B 306 and an RNC 308.

The UE 301 comprises a receiver 303 having MUD capabilities. The BS or node-B 306 includes a receiver 305 having MUD capabilities, an $I_{or}$ measuring device 302 and an $I_{oc}$ measuring device 304. The BS or node-B 306 communicates the $I_{or}$ and $I_{oc}$ to a radio network controller (RNC) 308 comprising a radio resource management (RRM) device 310. The RRM 310, in conjunction with the BS or node-B 306, if needed, processes $I_{or}$ and $I_{oc}$ so that the total interference, as affected by the MUD(s) 303, 305, may be obtained. As explained above, the total interference may be obtained using $I_{or}$, $I_{oc}$, $\overline{\alpha}_{UL}$, and $\overline{\beta}_{UL}$.

Once the total interference is obtained, $\eta_{UL}$ and noise rise are also obtained. If the noise rise is above a predetermined value, each users' contribution to the noise rise is measured. Preferably, each users' transmission power, received power and class of service are also measured. The data transmission rate of the user currently having the highest contribution to noise rise and the lowest class of service is reduced as needed until the overall noise rise falls below the predetermined value, as explained in connection with Figure 4.

Although the present invention has been described in detail, it is to be understood that the invention is not limited thereto, and that various changes can be made therein without departing from the scope of the invention, which is defined by the attached claims.

**Claims**

1. A Radio Network Controller, RNC, (210) for controlling uplink congestion,
   the RNC comprising a radio resource management, RRM, device (212) for calculating a noise rise value (12, 14) based on received measured intra-cell interference, $I_{or}$ , from a user equipment, UE, (202) ;
   the RNC implementing congestion relieving measures (18) when the calculated noise rise is above a predetermined threshold,
   **characterized in that**
   when calculating the noise rise value, a contribution of inter-cell interference, $I_{oc}$ , is taken into account by means of a predetermined value, i, for the ratio of inter-cell interference to intra-cell interference.

2. The RNC of claim 1, wherein the RRM accounts for the effect of a multi-user detection, MUD, capability when calculating the noise rise value.

3. The RNC of claim 1, wherein the congestion relieving measures comprise:

   determining a class of service for all UEs communicating with a base station connected to the RNC;
   calculating a contribution to noise rise for each UE;
   selecting a UE that is currently contributing the most to noise rise and has the lowest class of service; and
   adjusting transmission parameters of the selected UE.

4. The RNC of claim.3, wherein a data transmission rate of the selected UE is adjusted.

5. The RNC of claim 3, wherein a signal-to-noise ratio, SNR, target of the selected UE is adjusted.

**Patentansprüche**

1. Funknetzsteuerung, RNC, (210) zur Stausteuerung auf der Aufwärtsstrecke,
   wobei die RNC eine Funkressourcenverwaltungsvorrichtung, RRM-Vorrichtung, (212) zum Berechnen eines Rauschanstiegswerts (12, 14) basierend auf der von einem Benutzergerät UE (202) empfangenen gemessenen Intrazellen-Interferenz, $I_{or}$, aufweist,
   die RNC Stauabbaumaßnahmen (18) implementiert, wenn der berechnete Rauschanstieg über einem vorbestimmten Schwellwert liegt,
   **dadurch gekennzeichnet, daß**
   beim Berechnen des Rauschanstiegswerts ein Beitrag der Interzellen-Interferenz, $I_{oc}$ mittels eines vorbestimmten Werts, i, für das Verhältnis von Interzellen-Interferenz zu Intrazellen-Interferenz berücksichtigt wird.

2. RNC nach Anspruch 1, wobei die RMM die Wirkung einer Mehrteilnehmer-Detektionsfähigkeit, MUD-Fähigkeit, berücksichtigt, wenn sie den Rauschanstiegswert berechnet.

3. RNC nach Anspruch 1, wobei die Stauabbaumaßnahmen aufweisen:

   Bestimmen einer Dienstklasse für alle UEs, die mit einer Basisstation kommunizieren, die mit der RNC verbunden ist;

Berechnen eines Beitrags zu dem Rauschanstieg für jedes UE;

Auswählen eines UE, das gegenwärtig das Meiste zu dem Rauschanstieg beiträgt und die niedrigste Dienstklasse hat; und

Einstellen der Übertragungsparameter für das ausgewählte UE.

**4.** RNC nach Anspruch 3, wobei eine Datenübertragungsrate des ausgewählten UE eingestellt wird.

**5.** RNC nach Anspruch 3, wobei ein Ziel für ein Signal-Rauschverhältnis, SNR, des ausgewählten UE eingestellt wird.

**Revendications**

**1.** Contrôleur de réseau radio, RNC, (210) permettant de contrôler une congestion en liaison montante, le RNC comprenant un dispositif de gestion de ressources radio RRM (212) permettant de calculer une valeur d'élévation de bruit (12, 14) fondée sur l'interférence intracellulaire mesurée reçue, $I_{or}$, depuis un matériel utilisateur, UE (202) ;

le RNC mettant en oeuvre des mesures de détente de la congestion (18) lorsque l'élévation de bruit calculée est supérieure à un seuil prédéterminé,

**caractérisé en ce que**

lorsqu'on calcule la valeur de l'élévation du bruit, une contribution d'interférence inter-cellulaire $I_{oc}$, est prise en compte au moyen d'une valeur prédéterminée, i, pour le rapport entre l'interférence inter-cellulaire et l'interférence intra-cellulaire.

**2.** RNC selon la revendication 1, dans lequel le RRM prend en compte l'effet d'une capacité de détection d'utilisateurs multiples, MUD, lors du calcul de la valeur de l'élévation du bruit.

**3.** RNC selon la revendication 1, dans lequel les mesures de détente de la congestion comprennent :

la détermination d'une classe de service pour tous les UE communiquant avec une station de base connectée au RNC ;

le calcul d'une contribution à l'élévation de bruit pour chaque UE ;

la sélection d'un UE qui contribue actuellement le plus à l'élévation du bruit et qui présente la plus faible classe de service ; et

l'ajustement des paramètres de transmission de l'UE sélectionné.

**4.** RNC selon la revendication 3, dans lequel un débit de transmission de données de l'UE sélectionné est ajusté.

**5.** RNC selon la revendication 3, dans lequel un rapport signal/bruit SNR cible de l'UE sélectionné est ajusté.

10

Calculate UL Load Factor
($\eta_{UL}$) According To
Equation 2                    12

Calculate Noise_Rise$_{dB}$
According To Equation 3        14

16

Noise_Rise$_{dB}$
Above
Predetermined
Value?

NO                                    YES

18    Implement Congestion
Relieving Measures

**FIGURE 1**

50

52 ⌒ ┌─────────────────┐
        │    Measure      │
        │   Noise Floor   │
        └─────────────────┘

54 ⌒ ┌──────────────────────────────┐
        │  Calculate UL Load Factor    │
        │  ($\eta_{UL}$) According To Equation │
        │              5               │
        └──────────────────────────────┘

56 ⌒ ┌──────────────────────────────┐
        │  Calculate Noise_Rise$_{dB}$   │
        │  According To Equation 6     │
        └──────────────────────────────┘

58 ⌒
        Noise_Rise$_{dB}$
           Above
        Predetermined
           Value?

NO                                    YES

60 ⌒ ┌──────────────────────────────┐
        │   Implement Congestion       │
        │   Relieving Measures         │
        └──────────────────────────────┘

**FIGURE 2**

100

Determine Transmission Power
For Each User — 102

Determine Received Power For
Each User — 104

Determine Class Of Service For
Each User — 106

Calculate Contribution To
Noise_Rise$_{dB}$ For Each User — 108

Select User that Contributes the
Most to Noise_Rise$_{dB}$ And Has the
Lowest Service Class Priority — 110

Reduce The Transmission Rate Of
The Selected User — 112

NO ◇ Is
Congestion
Relieved? — 113 YES

Go Back To
Congestion
Monitoring — 114

**FIGURE 3**

BS/Node-B

214

RNC

RRM
Device

Intra-Cell Interference
Signal Receiver

208

Receiver
Having
Multi-User
Detection
Capabilities

205

212

210

200

UE

202

Receiver
Having Multi-
User Detection
Capabilities

203

Intra-Cell
Interference
Measuring Device

204

Intra-Cell
Interference
Signaling Device

206

**FIGURE 4**

**FIGURE 5**

**EP 1 727 388 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9824199 A
- WO 0193454 A